(19) Europäisches Patentamt

European Patent Office

Office européen des brevets

(11) **EP 1 070 563 A1**

(12) **EUROPEAN PATENT APPLICATION**
published in accordance with Art. 158(3) EPC

(43) Date of publication:
24.01.2001 Bulletin 2001/04

(51) Int. Cl.$^7$: **B23B 29/034**, B23B 39/00

(21) Application number: 99939174.1

(86) International application number:
PCT/JP99/01196

(22) Date of filing: 12.03.1999

(87) International publication number:
WO 99/46074 (16.09.1999 Gazette 1999/37)

(84) Designated Contracting States:
**DE FR GB IT**

(30) Priority: **12.03.1998 JP 10325198**

(71) Applicants:
 • **NT Engineering Kabushiki Kaisha**
 **Takahama-shi, Aichi-ken 444-1335 (JP)**
 • **Masuda, Yukio**
 **Ichikawa-shi, Chiba-ken 272-0114 (JP)**

(72) Inventors:
 • **MASUDA, Yukio**
 **Ichikawa-shi Chiba 272-0114 (JP)**

 • **KOMAI, Yasuhiro**
 **NT Engineering Kabushiki Kaisha**
 **Takahama-shi Aichi 444-1335 (JP)**

(74) Representative:
 **Borchert, Uwe Rudolf, Dipl.-Ing.**
 **Patentanwalt**
 **Puschmann & Borchert**
 **Patentanwälte**
 **European Patent Attorneys**
 **Postfach 10 12 31**
 **80086 München (DE)**

(54) **TOOL POSITIONING STRUCTURE AND WORKING MACHINE**

(57) To make it possible to carry out tool position adjustment automatically with high accuracy.

A tool holder 10 is, on one end thereof, fixed on a shank 12 and has, on the other end thereof, a housing 16 whereon a tool 14 such as a boring bar is mounted on the side thereof, a drive mechanism 18 that imparts a force to rotate around the center axis of the shank 12, and a rotating force conversion mechanism 20 that is capable of adjusting the position of the tool 14 in the radial direction by converting the rotating force into linear motion in only one direction among radial directions of the shank 12.

FIG.1

EP 1 070 563 A1

Printed by Xerox (UK) Business Services
2.16.7 (HRS)/3.6

## Description

DETAILED DESCRIPTION OF THE INVENTION

FIELD OF THE INDUSTRIAL UTILIZATION

The present invention relates to a tool position adjustment mechanism whereon a tool is mounted and an apparatus wherein the tool position adjustment mechanism is incorporated.

BACKGROUND OF THE INVENTION

An automatic tool changing mechanism (ATC) is usually used in a machining center or the like to carry out the operations of automatically changing various tools. For this type of operation, a machine provided with a tool holder that has the so-called ATC shank is used, with such a constitution being generally employed as the tool holder is automatically mounted on and removed from a spindle.

To carry out a high-precision operation such as boring on the machine, adjustment of tool nose position is required. In order to change a tool tip that has worn out with a new tool tip, although the tool nose position is preset in accordance to the target dimension of machining, the presence of preset error makes it indispensable to carry out a trial machining operation and, based on the result thereof, adjust the tool nose position before starting the actual machining operation.

In case a machining accuracy higher than the accuracy of the ATC operation is required, machining operation cannot be started immediately upon automatic changing of the tool. Therefore, after preliminary machining is carried out wherein a workpiece is machined to a diameter smaller than the target diameter, the tool nose position is adjusted using the dimension achieved in the preliminary machining, before starting the actual machining operation.

Moreover, when machining operations are repeated using the same tool tip, the tools tip wears resulting in a change in the machined diameter. Accordingly, adjustment of tool nose position is carried out as the machined diameter changes.

PROBLEM THE INVENTION AIMS TO SOLVE

However, the adjustment of tool nose position described above relies on manual operation of a human operator in actuality, because it requires an accuracy in the order of micrometers, The operator adjusts the tool nose position relying on the subtle feeling of the finger touch while measuring with a dial gauge having an accuracy in the order of micrometers, and there has been such a problem that the adjustment operation is very tedious and time-consuming.

The present invention aims at solving the problems described above, and an object thereof is to provide an tool position adjustment mechanism capable of carrying out the tool position adjusting operation automatically with high accuracy, and an apparatus provided therewith.

MEANS FOR SOLVING THE PROBLEM

In the tool position adjustment mechanism of the present invention, in order to solve the problems described above, when a rotating force around the axis of a shank is applied via a drive mechanism, the rotating force is converted to that in only one straight direction among radial directions perpendicular to the axial direction under the action of a rotating force conversion mechanism. A housing has a fixed portion that is installed on the shank, a movable portion whereon a tool is mounted and an elastic portion disposed between the fixed portion and the movable portion, with the tool position being adjusted in the radial direction of the shank.

Thus the housing itself whereon the tool is mounted has the function of adjusting the position and is sufficiently durable against high-speed rotation, the vibration of the cutting operation and the like, while making it possible to automatically and easily adjust the tool position in the radial direction of the shank.

The rotating force conversion mechanism has an inner housing that is fixed on the shank, a first eccentric ring freely rotatable along the outer circumference of the inner housing, a second eccentric ring that is disposed so that the center of the inner circumference thereof which accommodates the first eccentric ring is offset and is freely rotatable along the inner circumference of the movable portion, and power transmitting means that transmits the rotating force of the drive mechanism after conversion thereof into rotating movements of the first and second eccentric rings which are in opposite directions and in synchronization with each other. As a consequence, it is made possible to efficiently convert the rotating force of the drive mechanism into linear motion in the radial direction of the tool, and sufficiently tolerate the resistance to cutting and the like.

The transmitting means has first and second drive gears connected to the drive mechanism, an external gear that is mounted on the first eccentric ring and is in mesh with the first drive gear and an internal gear that is mounted on the second eccentric ring and is in mesh with the second drive gear, wherein the pitch circle diameter $X$ of the external gear, the pitch circle diameter $x$ of the first drive gear, the pitch circle diameter $Y$ of the internal gear and the pitch circle diameter $y$ of the second drive gear are set so as to satisfy the relationships: $X/x = Y/y$ and $X + x = Y - y$. This constitution makes it possible to transmit the rotation movements in opposite directions and in synchronization with each other to the first and second eccentric rings with a simple operation. A plurality of rolling bodies are disposed in sliding portions of the inner housing, the first eccentric ring, the second eccentric ring and the movable portion, so that the rotating force conversion mechanism is driven smoothly.

The rotating force conversion mechanism has an outer housing fixed on the shank while surrounding the housing, the first eccentric ring freely rotatable along the outer circumference of the movable portion, the second eccentric ring that is disposed so that the center of the inner circumference thereof which accommodates the first eccentric ring is offset and is freely rotatable along the inner circumference of the movable portion, and the transmitting means that transmits the rotating force of the drive mechanism after conversion thereof into rotating movements of the first and second eccentric rings which are in opposite directions and in synchronization with each other. In this constitution, the housing is surrounded by the outer housing so that the housing can be effectively reduced in size, while maintaining a desired level of rigidity.

The rotating force conversion mechanism also has a tapered shaft that is connected to the drive mechanism to be rotated thereby, expandable and contractable ring member that is integrally inserted into the inner surface of a first support portion of the fixed portion and into the inner surface of a second support portion, and has a tapered inner circumference spaced by a predetermined space from the tapered outer circumference of the tapered shaft, and roller members that are disposed in the clearance to make integral contact with the tapered outer circumference and the tapered inner circumference while rolling with the axis thereof being inclined in the circumferential direction of the tapered outer circumference. As a consequence, it is made possible to efficiently convert the rotating force of the drive mechanism into linear motion in the radial direction of the tool, and sufficiently tolerate the resistance to cutting.

Also the tool position detecting mechanism that detects the moving state of the tool in said radial direction is provided, so that the operation of adjusting the tool position is carried out more efficiently with a high accuracy.

In the apparatus of the present invention, the drive mechanism is controlled according to signals from the tool position detecting mechanism by the controller carrying out radio communication with the transceiver mechanism installed in the tool holder. With this constitution, the operation of adjusting the tool position is carried out automatically with a high accuracy by remote operation via the controller through radio communication. The tool holder can be freely mounted on and removed from the spindle, thereby simplifying the maintenance and management of the tool holder.

PREFERRED EMBODIMENTS OF THE INVENTION

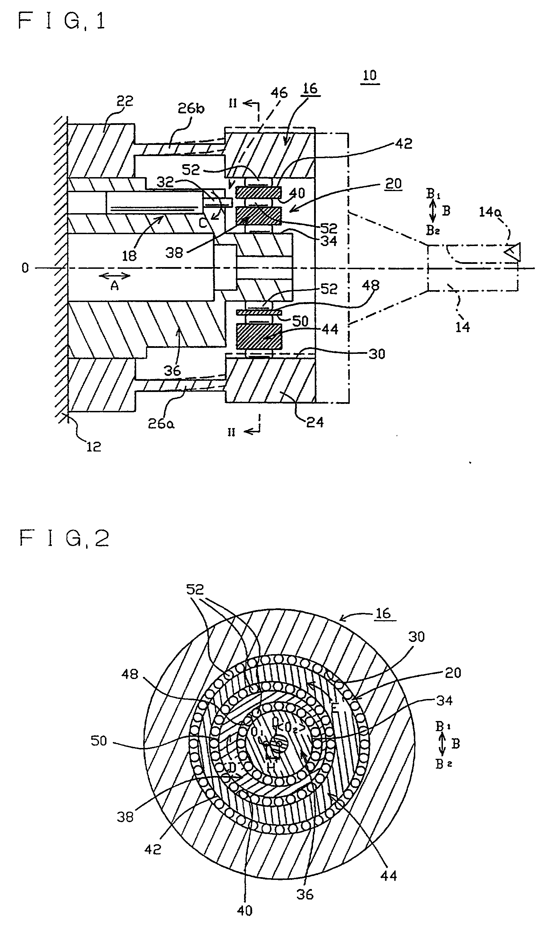

Fig.1 is a longitudinal sectional view showing a tool holder 10 that is the tool position adjustment mechanism according to the first embodiment of the present invention. Fig.2 is a sectional view along line II-II in Fig.1.

The tool holder 10 has a housing 16 one end of which is fixed on a shank 12 with a tool 14 such as a boring bar mounted on the other end thereof, a drive mechanism 18 that imparts a force to rotate around the axis (direction of arrow A) of the shank 12, and a rotating force conversion mechanism 20 that is capable of adjusting the position of the tool 14 in the radial direction by converting the rotating force into linear movement in only one straight direction (direction of arrow B) among the radial directions of the shank.

The housing 16 has a fixed portion 22 that is fixed on the shank 12, a movable portion 24 whereon the tool 14 is mounted, and a pair of parallel elastic portions 26a, 26b of flat plate shape that are disposed between the fixed portion 22 and the movable portion 24 and are freely movable in only in one straight direction (direction of arrow B) among radial directions perpendicular to the axial direction of the shank 12. The fixed portion 22 and the movable portion 24 are made in ring shape, while an inner circumference 30 is formed on the inside of the movable portion 24. The elastic portions 26a, 26b are made relatively thin to be capable of making elastic deformation and are disposed between the fixed portion 22 and the movable portion 24 integrally therewith, but may also be made separately from the fixed portion 22 and the movable portion 24, while being fixed by means of screw or the like. Number of the elastic portions 26a, 26b is not limited to one pair, and may be two or more pairs as long as disposed in parallel to each other.

The drive mechanism 18 has a drive shaft 32 that extends from a rotary drive power source incorporated in the tool holder 10 and is not shown, with the rotating force conversion mechanism 20 being connected to the drive shaft 32. The rotating force conversion mechanism 20 has an inner housing 36 that is fixed on the shank 12 in the housing 16 and has an outer circumference 34 which is concentric with the shank 12, a first eccentric ring 38, of which center O1 is offset by a distance H from the center O of the shank 12 (refer to Fig.2), that is freely rotatable along the outer circumference 34 of the inner housing 36, a second eccentric ring 44, of which center O2 is concentric with the center O of the shank 12 at a predetermined angular position and an inner circumference 40 thereof that accommodates the first eccentric ring 38 is offset while an outer circumference 42 thereof is freely rotatable along the inner circumference 30 of the movable portion 24, and transmitting means 46 that transmits the rotating force of the drive shaft 32 to the first and second eccentric rings 38, 44. The transmitting means 46 has the function of converting the rotating force to the rotation movements opposite to each other of the first and second eccentric rings 38, 44 and comprises, for example, gears, a belt or a chain.

A plurality of rollers (rolling bodies) 52 are disposed between the outer circumference 34 of the inner housing 36 and the inner circumference 48 of the first eccentric ring 38, between the outer circumference 50 of the first eccentric ring 38 and the inner circumference 40 of the second eccentric ring 44, and between the outer circumference 44 of the second eccentric ring and the inner circumference 30 of the movable portion 24.

Operation of the tool holder 10 having constitution described above according to the first embodiment will now be described below.

When the drive shaft 32 rotates in the direction indicated by arrow C under the action of the drive mechanism 18, the first and second eccentric rings 38, 44 are driven by the transmitting means 46 to rotate in directions opposite to each other. Specifically, the first eccentric ring 38 rotates in the direction indicated by arrow D while the second eccentric ring 44 rotates in the direction indicated by arrow E, as shown in Fig.2.

The elastic portions 26a, 26b are flat plates disposed in parallel to each other, and can deform only in the direction of arrow B. As a result, as the first and second eccentric rings 38, 44 rotate in directions opposite to each other in synchronization, the movable portion 24 with which the outer circumference 42 of the second eccentric ring 44 is engaged via a roller 52 moves in substantially parallel to the arrow B relative to the fixed portion 22 via the elastic portions 26a, 26b.

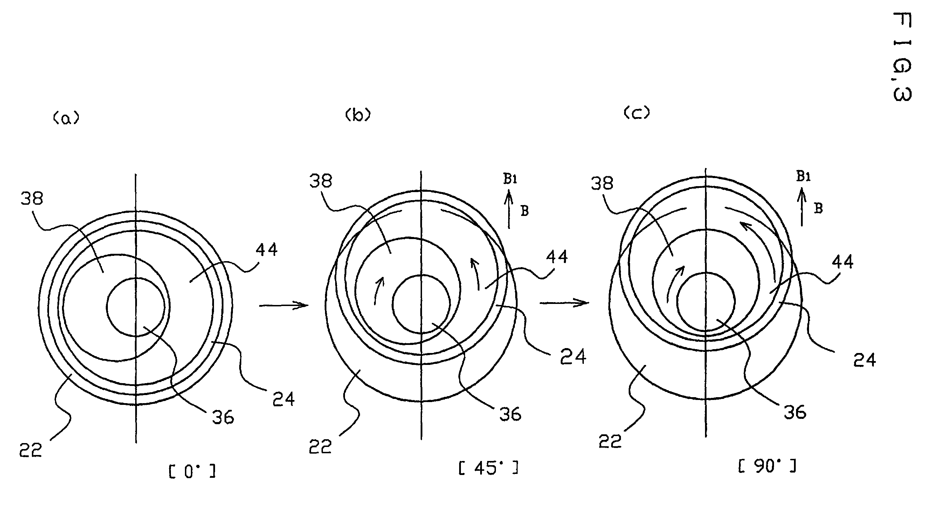

Specifically, as shown in Fig.2 and Fig.3(a), under such a condition as the drive shaft 32 takes a predetermined initial angular position (0 ), center O2 of the second eccentric ring 44 becomes concentric with the center O of the shank 12. Then as the first and second eccentric rings 38, 44 rotate in directions opposite to each other by the same angle, the second eccentric ring 44 moves linearly in the direction of arrow B1 as shown in Fig.3(b) and (c), so that the outer circumference 42 of the second eccentric ring 44 presses the inner circumference 30 of the movable portion 24 that is engaged via the roller 52 in the direction of arrow B1.

As a consequence, the movable portion 24 makes substantially parallel movement (hereinafter referred to simply as parallel movement) in the direction of arrow B1 under the pressing force of the outer circumference 42 of the second eccentric ring 44, so that the tool 14 mounted on the movable portion 24 makes parallel movement in the direction of arrow B1. When the first and second eccentric rings 38, 44 rotate in directions opposite to those described above, the movable portion 24 makes parallel movement in the direction of arrow B2 under the pressing force of the outer circumference 42 of the second eccentric ring 44, so that position of the tool 14 is adjusted in the direction of arrow B2.

Thus according to the first embodiment, when the force to rotate around the axis of the shank 12 is transmitted via the drive shaft 32, the first and second eccentric rings 38, 44 that constitute the rotating force conversion mechanism 20 rotate in directions opposite to each other in synchronization, and the position of the tool 14 is adjusted linearly and efficiently in the radial direction of the shank 12 together with the movable portion 24 via the elastic portion comprising a pair of flat plates parallel to each other. Thus the housing 16 itself whereon the tool 14 is mounted has the function of adjusting the position and is capable of automatically and easily adjusting the position of the tool nose 14a of the tool 14 in the radial direction of the shank 12, while the housing 16 has sufficient durability against the resistance to the cutting operation by the tool 14.

A plurality of the rollers 52 are disposed in sliding portions of the inner housing 36, the first eccentric ring 38, the second eccentric ring 44 and the movable portion 24, so that the rotating force conversion mechanism 20 is driven smoothly. The rollers 52 may be replaced by balls, while an oil-impregnated bearing may be employed and such a constitution may also be employed that does not use rolling bodies.

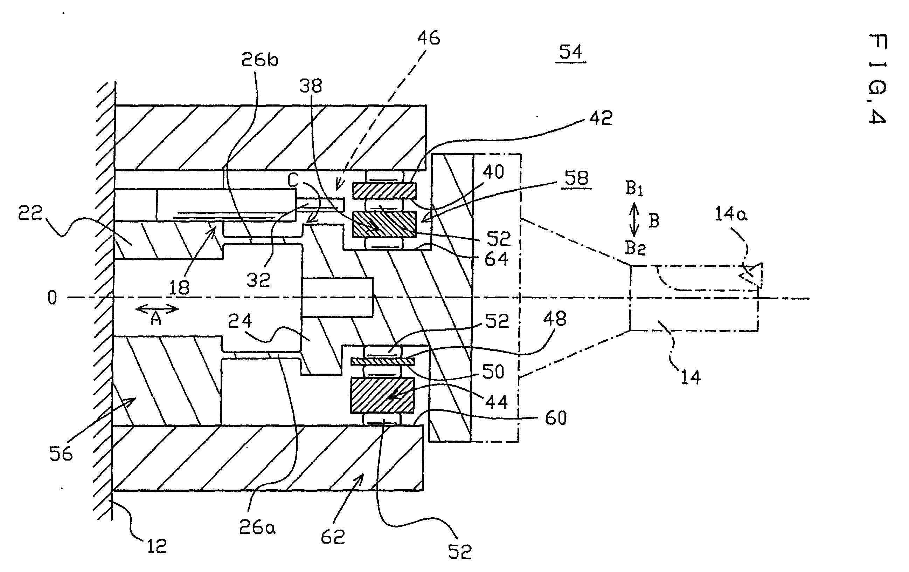

Fig.4 is a longitudinal sectional view showing a tool holder 54 according to the second embodiment of the present invention. Components identical to those of the tool holder 10 of the first embodiment will be denoted with the identical reference numerals and detailed description thereof will be omitted.

The tool holder 54 has a housing 56, the drive mechanism 18 and a rotating force conversion mechanism 58. The rotating force conversion mechanism 58 has an outer housing 62 that is fixed on the shank 12 while surrounding the housing 56 and has an inner circumference 60 which is concentric with the shank 12, a first eccentric ring 38 that is freely rotatable along the outer circumference 64 of the movable portion 24, a second eccentric ring 44 that is freely rotatable along the inner circumference 60 of the outer housing 62, and transmitting means 46 that transmits the rotating force of the drive shaft 32 to the first and second eccentric rings 38, 44.

In the tool hoder 54 having such a constitution as described above, when the drive shaft 32 rotates in the direction of arrow C under the action of the drive mechanism 18, the first and second eccentric rings 38, 44 are driven by the transmitting means 46 to rotate in directions opposite to each other in synchronization. In the housing 56, at this time, the movable portion 24 can deform only in the direction of arrow B via the elastic portions 26a, 26b of the pair of flat plates parallel to each other, while the outer housing 62 that supports the outer circumference of the second eccentric ring 44 is fixed on the shank 12 and cannot move in the direction of arrow B. Consequently, as the first and second eccentric rings 38, 44 rotate in directions opposite to each other in synchronization, the movable portion 24 moves in substantially parallel to the direction of arrow B relative to the fixed portion 22.

According to the second embodiment, since the housing 56 is disposed in the outer housing 62, as described above, diameter of the housing 56 can be effectively made smaller. As a result, the housing 56 itself can be made smaller in size and sufficient rigidity of the housing 56 can be maintained.

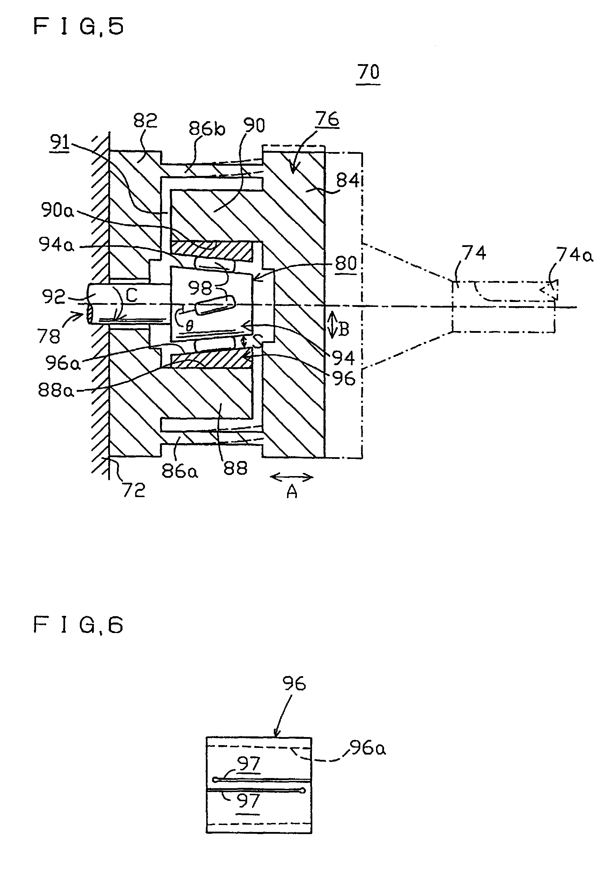

Fig.5 is a longitudinal sectional view showing a tool holder 70 of the third embodiment of the present invention. The tool holder 70 is, on one end thereof, fixed on a shank 72 and has, on the other end thereof, a housing 76 whereon a tool 74 such as a boring bar is mounted, a drive mechanism 78 that imparts a force to rotate around the axial direction (direction of arrow A) of the shank 72, and a rotating force conversion mechanism 80 that is capable of adjusting the position of the tool 74 in the radial direction by converting the rotating force into linear motion in the radial directions (direction of arrow B) of the shank 72.

The housing 76 has a fixed portion 82 that is fixed on the shank 72, a movable portion 84 whereon the tool 74 is mounted, elastic portions 86a, 86b that are disposed integrally between the fixed portion 82 and the movable portion 84 and are capable of moving freely in one straight direction (direction of arrow B) among the radial directions perpendicular to the axial direction of the shank 72, a first support 88 that is located inward from the elastic portion 86a and protrudes from the fixed portion 82 toward the movable portion 84, and a second support 90 that is located inward from the elastic portion 86b and protrudes from the movable portion 84 toward the fixed portion 82.

The elastic portions 86a, 86b are made in the form of parallel flat plates of relatively small thickness so as to be capable of elastically deforming. The first support 88, the second support 90 and the elastic portions 86a, 86b are provided integrally by forming an S-shaped slit 91 in the housing 76.

The rotating force conversion mechanism 80 has a tapered shaft 94 that is connected to a drive shaft 92 which constitutes the drive mechanism 78 thereby to rotate and has a center axis concentric with the center axis of the shank 72 when not in operation, a power ring (ring member) 96 that is integrally inserted in an inner surface 88a of the first support 88 and an inner surface 90a of the second support 90 and has a tapered inner circumferential surface 94a formed therein that is separated by a predetermined clearance S from the tapered outer circumferential surface 94a of the tapered shaft 94, and a plurality of rollers 98 that are disposed in the clearance S to make integral contact with the tapered outer circumferential surface 94a and the tapered inner circumferential surface 96a while rolling with the center axes thereof being inclined by an angle from the axial direction of the tapered shaft 94 toward the circumference of the tapered outer circumferential surface 94a. The roller members 98 make point contact with the tapered outer circumferential surface 94a and the tapered inner circumferential surface 96a, although the tapered outer circumferential surface 94a and the tapered inner circumferential surface 96a may also be curved surfaces or the roller members 98 may be formed in an oval shape in order to ensure more reliable contact.

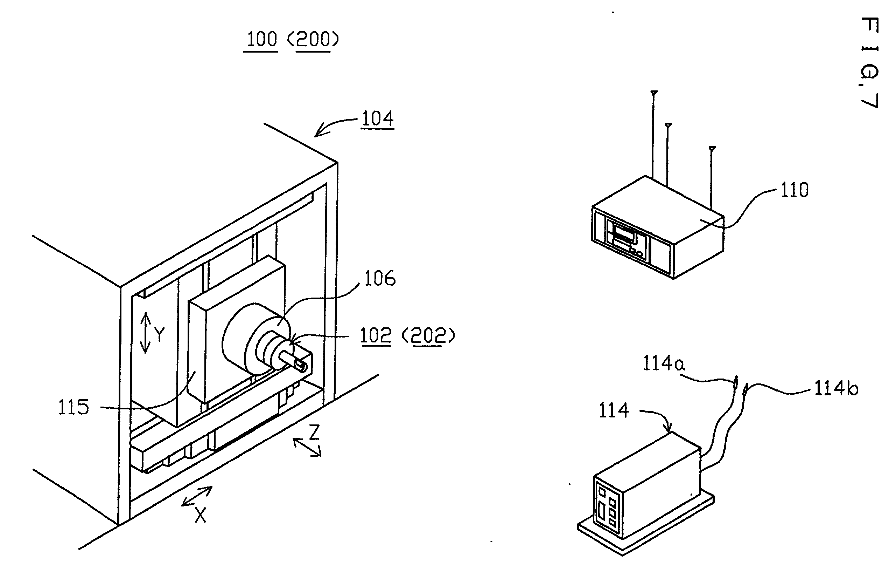

As shown in Fig.6, the power ring 96 has straight outer circumference with a pair of slits 97 being disposed in proximity of each other on both sides thereof, and can be expanded within a predetermined range.

Operation of the tool holder 70 having the constitution described above according to the third embodiment will be described below.

When the drive shaft 92 rotates in the direction indicated by arrow C under the action of the drive mechanism 78, the tapered shaft 94 rotates so tat the plurality of roller members 98 that make sliding contact with the tapered outer circumferential surface 94a of the tapered shaft 94 rotate. The roller members 98 are inclined by an angle toward the circumference of the tapered outer circumferential surface 94a. When the roller members 98 rotate, so that the power ring 96 is pressed in the direction to increase the diameter thereof.

The power ring 96 is integrally inserted in the inner surface 88a of the first support 88 and the inner surface 90a of the second support 90 while the first support 88 is connected to the shank 72 via the fixed portion 82 and the second support 90 is connected to the movable portion 84 that is freely movable in the direction of arrow B. Consequently, the power ring 96 causes the movable portion 84 to move in the direction of arrow B under the rotating action of the roller members 98, and the movable portion 84 makes parallel movement in the direction of arrow B via the elastic portions 86a, 86b forming a pair of flat plates parallel to each other. Thus the tool 74 mounted on the movable portion 84 makes parallel movement in the direction of arrow B and position of the tool tip 74a is adjusted.

In the third embodiment, as described above, the housing 76 itself whereon the tool 74 is mounted has the function of adjusting the tool position, similar effects to those of the first embodiment can be achieved such as the capability to automatically and easily adjust the position of the tool 74 in the radial direction of the shank 72, and the capability of the housing 76 to sufficiently tolerate the resistance to cutting operations by the tool 74.

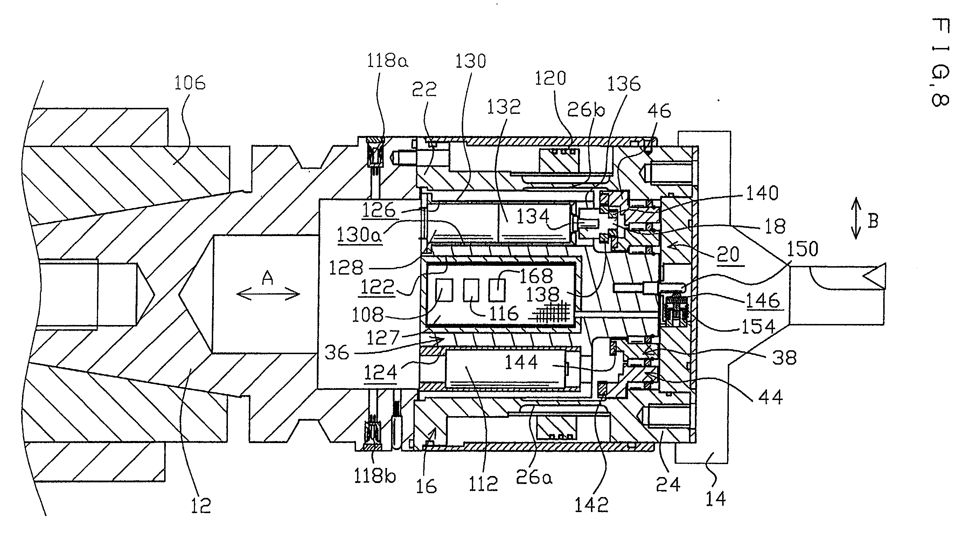

Fig.7 is a perspective view showing the whole of an apparatus 100 according to the fourth embodiment of the present invention. Fig.8 is a longitudinal sectional view of a tool holder 102 that constitutes the apparatus 100. Components identical to those of the tool holder 10 of the first embodiment will be denoted with the identical reference numerals and detailed description thereof will be omitted.

The apparatus 100 comprises a machine tool 104, a tool holder 102 that can be freely mounted on and removed from a spindle (ATC spindle) 106 of the machine tool 104, a communication control circuit (transceiver) 108 installed in the tool holder 102, a controller 110 that carries out radio communication with the communication control circuit 108 by means of electromagnetic wave, and a battery charger 114 that charges a battery (DC power source) 112 that is incorporated in the tool holder 102.

The spindle 106 is connected to a rotary drive power source not shown and is rotatably supported by a movable base 115 to be capable of freely moving in the direction of arrow X (horizontal direction), the direction of arrow Y (vertical direction) and the direction of arrow Z (axial direction).

As shown in Fig.8, the battery 112 supplies electric power via a power circuit 116 to the drive mechanism 18, while a pair of charging terminals 118a, 118b are provided on the outer circumference of the tool holder 102 for replenishing electric power to the battery 112 from a pair of charging pins 114a, 114b of the battery charger 114. The tool holder 102 has an antenna 120 incorporated therein, while control signals sent from the controller 110 to the antenna 120 by radio communication is demodulated by the communication control circuit 108 that is connected to the antenna 120, thereby to control the drive mechanism 18 via the power circuit 116.

The inner housing 36 has an electrical component mounting hole 122 formed at the center thereof, while a plurality of battery holes 124 and a motor hole 126 are formed to surround the electrical component mounting hole 122. The electrical component mounting hole 122 incorporates the communication control circuit 108 and an electronic circuit board 127 that constitutes the power circuit 116. Batteries 112 are housed in the plurality of battery holes 124 and the motor hole 126 accommodates a reversible DC motor 128, that constitutes the drive mechanism 18, being disposed via a motor housing 130.

A speed reducer 132 is connected to the drive shaft of the DC motor 128. The speed reducer 132 is designed to have a high speed reduction ratio and is housed in the motor housing 130. The motor housing 130 has notch 130a formed on the outer circumference thereof thereby to permit deformation of the motor housing 130 itself in the direction of arrow B, since an output shaft 134 of the speed reducer 132 experiences a slight displacement in the direction of arrow B.

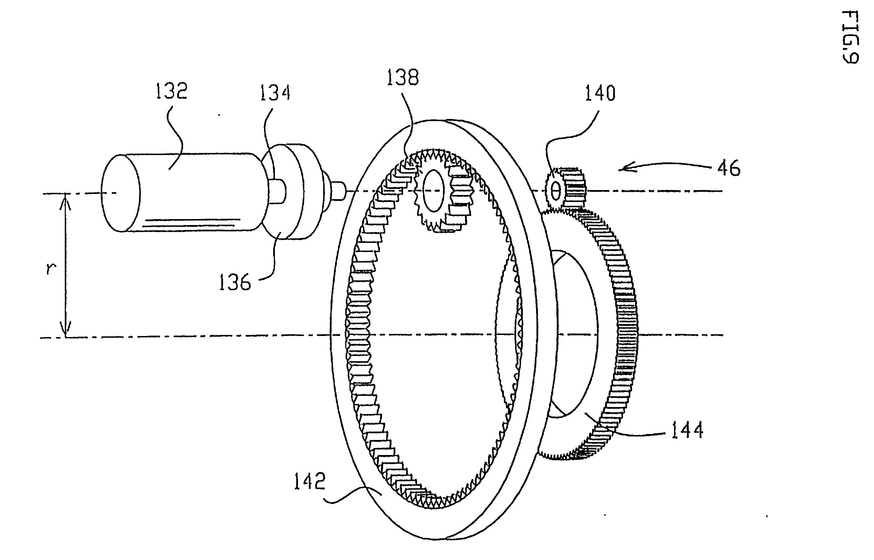

As shown in Fig.8 and Fig.9, a gear adapter 136 is connected to the output shaft 134 of the speed reducer 132, while the gear adapter 136 is provided with a first drive gear 140 of a smaller diameter and a second drive gear 138 of a larger diameter that constitute transmitting means 46 are mounted concentrically thereon. The second drive gear 138 is in mesh with an internal gear 142 that is fixed on an end of the second eccentric ring 44, and the first drive gear 140 is in mesh with an external gear 144 that is fixed on an end of the first eccentric ring 38. The second drive gear 138, the first drive gear 140, the internal gear 142 and the external gear 144 are configured so that the first and second eccentric rings 38, 44 are driven by the DC motor 128 to rotate in synchronization with each other by the same angle in opposite directions. The first and second drive gears 140, 138 are directly in mesh with the external gear 144 and the internal gear 142, but may also be in indirect mesh via a chain, belt or the like.

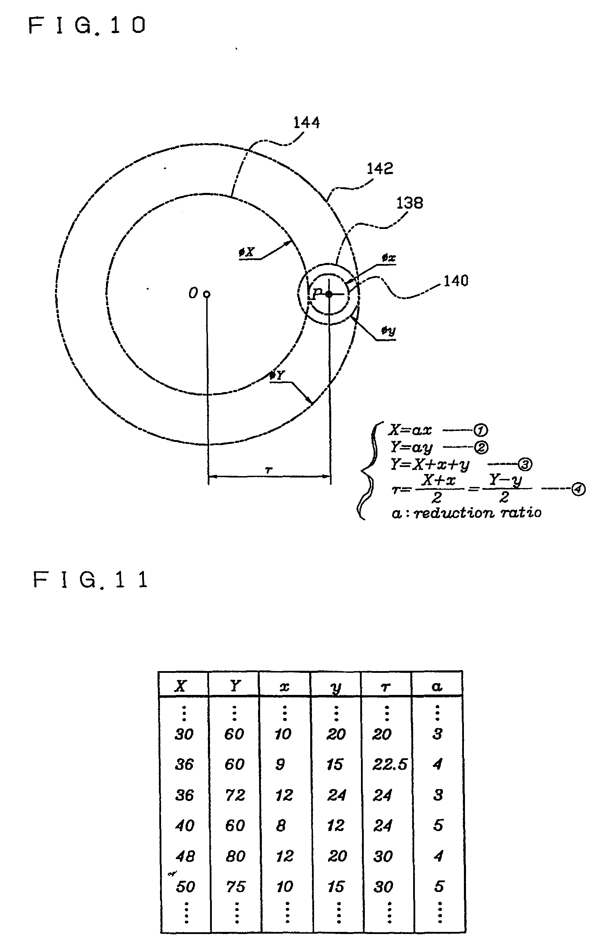

As shown in Fig.10, the pitch circle diameter X of the external gear 144, the pitch circle diameter x of the first drive gear 140 that is in mesh with the external gear 144, the pitch circle diameter Y of the internal gear 142 and the pitch circle diameter y of the second drive gear 138 that is in mesh with the internal gear 142 are set so as to satisfy the relationships: $X=ax$ , $Y=ay$ (a is the speed reduction ratio), namely $X/x = Y/y$ . Also relationship $Y=X+x+y$ is satisfied and the distance r between the centers is given as $r = (X+x)/2 = (Y+y)/2$ . A practical example that satisfies the above relationships is shown in Fig.11.

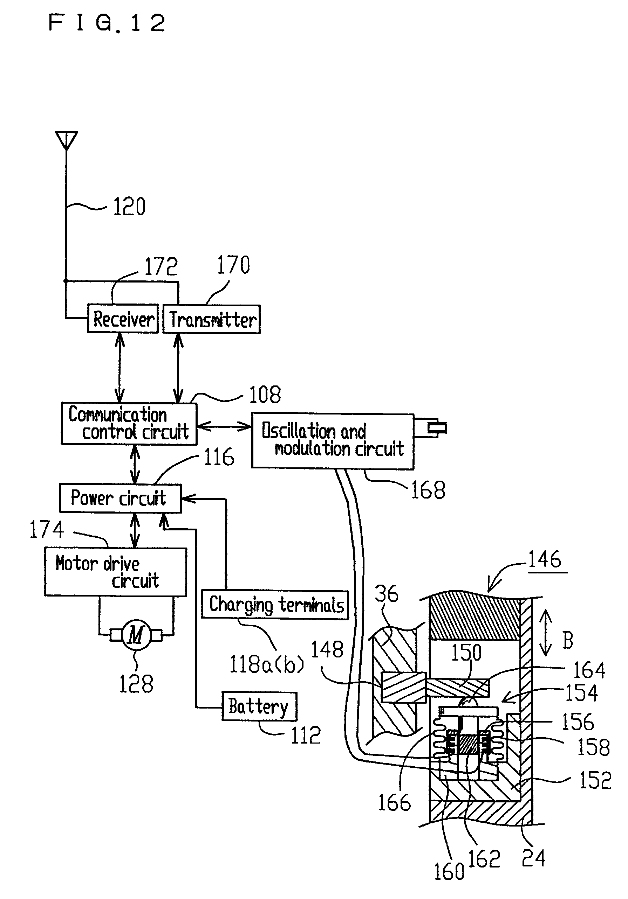

The tool holder 102 is provided with a detecting mechanism (tool position detecting mechanism) 146 that detects the state of adjusting the position of the tool 14 in the direction of arrow B by the rotating force conversion mechanism 20. The detecting mechanism 146 has a pin 150 that is fixed on the end face of the inner housing 36 via the adapter 148, and a displacement detecting sensor (linear sensor) 154 that is fixed via the adapter 152 in the movable portion 24 which constitutes the housing 16, as shown in Fig.8 and Fig.12.

The sensor 154 has a coil 158 disposed in a magnetic shield 156 as shown in Fig.12, and a measurement core 162 can freely move back and forth along a guide 160 whereon the coil 158 is installed from the outside. The measurement core 162 is mounted on the contact portion 164 whereon one end of a bellows capsule 166 made of a metal is fixed so that the bellows capsule 166 covers the coil 158 and the magnetic shield 156. The bellows capsule 166 has the function of protecting the detecting mechanism 146 as a whole from water. As long as this function can be performed, the bellows capsule 166 may also have other construction such as a cylinder provided with an O-ring or a rubber cover.

The coil 158 of the sensor 154 is connected to an oscillation and modulation circuit 168 that is mounted on the electronic circuit board 127 incorporated in the tool holder 102 (refer to Fig.8). The oscillation and modulation circuit 168 transmits high-frequency signals in mega-Hertz band via the communication control circuit 108 to the transmitter 170 that has the antenna 120 connected thereto. Connected to the antenna 120 is a receiver 172. Signals received by the receiver 172 are sent from the communication control circuit 108 to the power circuit 116 thereby to control the DC motor 128 to rotate forward or backward by means of a motor drive circuit 174.

Operation of the apparatus 100 having such a constitution as described above according to the fourth embodiment will be described below.

The tool holder 102 mounted on the spindle 106 as shown in Fig.7 moves selectively in the direction of arrow X, the direction of arrow Y or the direction of arrow Z while rotating under the action of the machine tool 104 thereby to carry out specified machining operation (for example, boring) on a workpiece not shown. When the tool tip of the tool 14 has worn and is replaced with a new tool 14 or the tool nose diameter has changed due to wear, adjustment of the tool nose position of the tool 14 is carried out.

Specifically, the spindle 106 is moved to a predetermined standby position and the tool holder 102 becomes ready till a series of machining operations are completed and a next workpiece (not shown) is to be machined. The control signal sent from the controller 110 via radio communication is caught by the antenna 120 and is sent to the communication control circuit 108 via the receiver 172 connected to the antenna 120. The signal sent by the radio communication is processed by the communication control circuit 108 thereby to control the DC motor 128 via the power circuit 116 by means of the motor drive circuit 174 that constitutes the drive mechanism 18.

As the DC motor 128 rotates, the rotation is reduced by the speed reducer 132 to a significantly lower speed and is transmitted via the gear adapter 136, that is connected to the output shaft 134 of the speed reducer 132, to the first and second drive gears 140, 138 that rotate together. As a consequence, the external gear 144 that is in mesh with the first and second drive gears 140, 138 and the first and second eccentric rings 38, 44 whereon the internal gear 142 is fixed rotate by the same angle in opposite directions to each other, so that the movable portion 24 of the housing 16 makes parallel movement in the direction of arrow B integrally with the tool 14.

At this time, when the movable portion 24 moves in the direction of arrow B, the contact portion 164 is pressed by the pin 150 so that the measurement core 162 makes sliding movement along the guide 160 as shown in Fig.12. Then total conductance of the coil 158 changes so that the oscillation and modulation circuit 168 generates sensor-adjustable high-frequency (MHz) signal that is sent by the transmitter 170 via the antenna 120 to the controller 110 by radio communication. The signals are demodulated by the controller 110 and counted, thereby to determine the displacement of the sensor 154, namely displacement of the tool 14 in the direction of arrow B.

According to the fourth embodiment, displacement of the tool 14 in the direction of arrow B is automatically detected by the detecting mechanism 146, with the result of measurement being sent to the controller 110 via radio communication and used by the controller 110 to control the drive mechanism 18 via radio communication according to the result of detection. Consequently, the tool holder 102 itself has high rigidity enough to bear high-speed rotation and vibration caused by cutting operation, while achieving the effect of carrying out automatic adjustment of the tool 14 position with a high accuracy. Similar effects can also be achieved by replacing the tool holder 54 of the second embodiment with the tool holder 102 that constitutes the apparatus 100.

When the battery 112 incorporated in the tool holder 102 is to be recharged, the tool holder 102 is removed from the spindle 106 and is set on the battery charger 114. Then the pair of charging pins 114a, 114b of the battery charger 114 are connected to the pair of charging terminals 118a, 118b of the tool holder 102, and the battery 112 is recharged smoothly. The pair of charging pins 114a, 114b of the battery charger 114 may be replaced by a single pin jack.

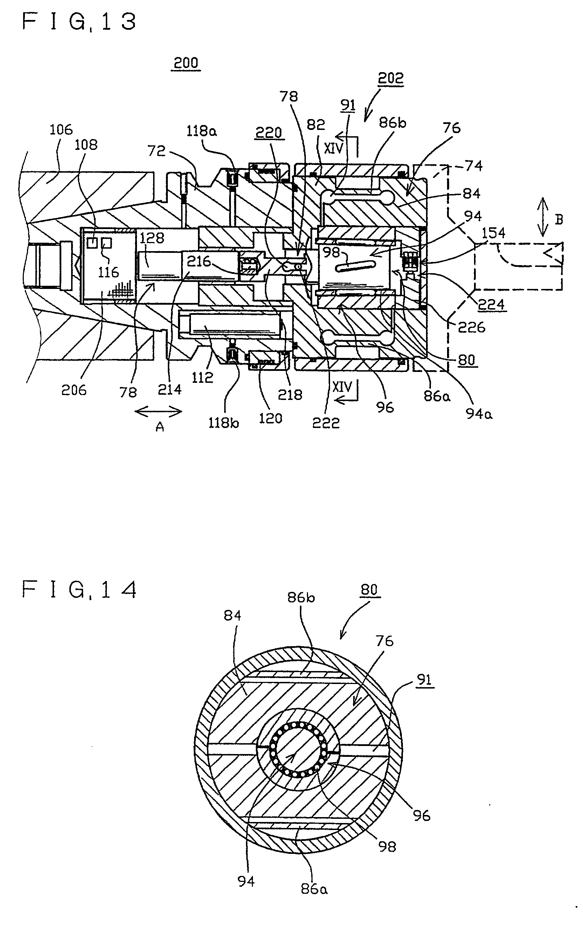

Fig.13 is a side view showing a tool holder 202 that constitutes an apparatus 200 according to the fifth embodiment of the present invention. Fig.14 is a sectional view along line XIV-XIV in Fig.13.

The apparatus 200 has a constitution similar to that of the apparatus 100 of the fourth embodiment shown in Fig.7, except for a tool holder 202 being mounted instead of the tool holder 102, and detailed description will be omitted. The tool holder 202 has a constitution similar to that of the tool holder 70 of the third embodiment. Components identical to those of the latter will be denoted with the identical reference numerals and detailed description thereof will be omitted.

The tool holder 202 has the battery (DC power source) 112 and an he electronic circuit board 206. The tool holder 202 is provided with the pair of charging terminals 118a, 118b for charging the battery 112 and the antenna 120 installed on the outer circumference of the tool holder 202. The electronic circuit board 206 comprises the power circuit 116 that supplies electric power of the battery 112 to the drive mechanism 78 and the communication control circuit 108 that is connected to the antenna 120.

The drive mechanism 78 has the reversible DC motor 129 of which drive shaft is connected to a speed reducer 214. Connected to an output shaft 216 of the speed reducer 214 is a drive adapter 218 that has a slit 220 formed thereon to extend in the axial direction (direction of arrow A) toward the distal end thereof. The tapered shaft 94 engages in the slit 220 via a pin 222 to be freely movably forward and backward in the axial direction. Disposed on the distal end side of the housing 76 is a detecting mechanism 224 that detects the state of adjusting the tool 74 in the direction of arrow B by the rotating force conversion mechanism 80.

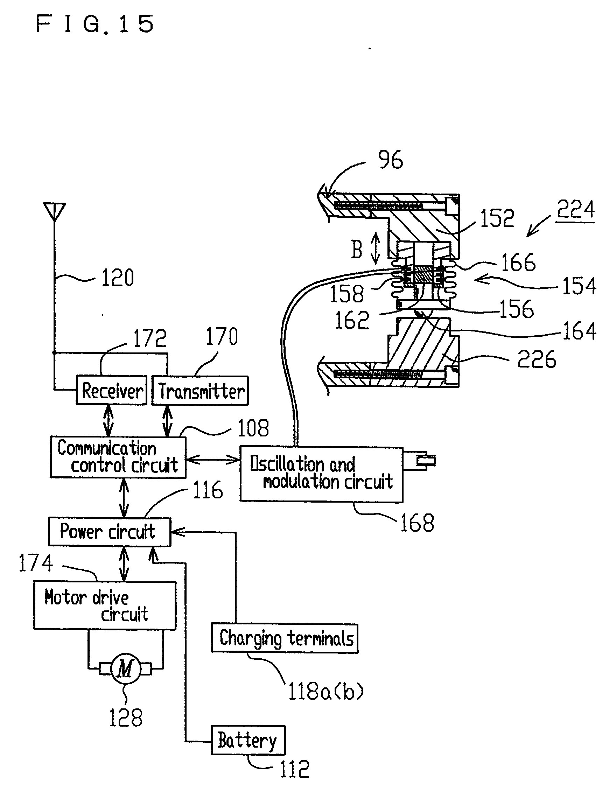

The detecting mechanism 224 has a constitution similar to that of the detecting mechanism 146, and components identical to those of the latter will be denoted with the identical reference numerals with detailed description thereof being omitted. As shown in Fig.13 and Fig.15, the detecting mechanism 224 has a sensor 154 and a sensor pressing portion 226. An adapter 152 whereon the sensor 154 is mounted is fastened onto one half of the power ring 96 by means of screw, and the sensor pressing portion 226 is fastened onto the other half of the power ring 96 by means of screw while opposing the sensor 154.

Operation of the apparatus 200 having such a constitution as described above according to the fifth embodiment will be described below. Basic operation of the apparatus 200 is similar to the operation of the apparatus 100 of the fourth embodiment, and therefore the operation of the tool holder 202 will be briefly described.

As the DC motor 128 rotates, the rotation speed is reduced by the speed reducer 214 to a significantly lower speed and is transmitted to a drive adapter 218 that is connected to the output shaft 216 of the speed reducer 214 and rotates. Accordingly, the tapered shaft 94 that is engaged with the drive adapter 218 via the slit 220 and the pin 222 rotates, while the plurality of rollers 98 that make sliding contact with the tapered surface 94a of the tapered shaft 94 rotate. Accordingly, the tapered shaft 94 the rollers 98 rotate in the forward and backward directions (direction of arrow A), while the power ring 96 expands or contracts within a predetermined range, so that the position adjustment operation of the tool 74 is performed.

In the fifth embodiment, the tool holder 202 itself has a rigidity high enough to bear high-speed rotation and vibration caused by the cutting operation, while achieving the effects similar to those of the third embodiment of carrying out automatic position adjustment of the tool 74 with a high accuracy.

EFFECTS OF THE INVENTION

In the tool position adjustment mechanism and the apparatus of the present invention, when a force to rotate around the center axis of the shank is applied via the drive mechanism, the rotating force is converted to linear motion in only one straight direction among radial directions under the action of the rotating force conversion mechanism. The housing has the fixed portion that is installed on the shank, the movable portion whereon the tool is mounted and the elastic portion of parallel plates disposed between the fixed portion and the movable portion, with the tool position being adjusted in the radial direction of the shank.

Thus the housing itself whereon the tool is mounted has the function to adjust the position and is capable of bearing high-speed rotation and vibration caused by the cutting operation, while making it possible to automatically and easily adjust the position with respect to the radial direction of the shank.

BRIEF DESCRIPTION OF THE DRAWINGS

Fig. 1     is a longitudinal sectional view showing the tool holder according to the first embodiment of the present invention.

Fig. 2     is a sectional view along line II-II in Fig.1.

Fig. 3     is a drawing for explaining the operation of the rotating force conversion mechanism that constitutes the tool holder.

Fig. 4     is a longitudinal sectional view showing the tool holder according to the second embodiment of the present invention.

Fig. 5     is a longitudinal sectional view showing the tool holder according to the third embodiment of the present invention.

Fig. 6     is a side view of the power ring that constitutes the tool holder.

Fig. 7     is a schematic perspective view of the apparatus of the fourth apparatus.

Fig. 8     is a longitudinal sectional view showing the tool holder that constitutes the apparatus according to the fourth embodiment of the present invention.

Fig. 9     is an exploded perspective view of the rotating force conversion mechanism that constitutes the tool bolder.

Fig. 10    is a drawing for explaining the setting of the diameters of the gears that constitute the rotating force conversion mechanism.

Fig. 11    shows examples of the diameters of the gears calculated.

Fig. 12    is a block diagram of circuits of the detecting mechanism incorporated in the tool holder.

Fig. 13    is a longitudinal sectional view showing the tool holder that constitutes the apparatus according to the fifth embodiment of the present invention.

Fig. 14    is a sectional view along line XIV-XIV in Fig.13

Fig. 15    is a block diagram of circuits of the detecting mechanism incorporated in the tool holder.

## DESCRIPTION OF REFERENCE NUMERALS

| | |
|---|---|
| 10, 54, 70, 102, 202: | Tool holder |
| 14, 74: | Tool |
| 16, 56, 76: | Housing |
| 18, 78: | Drive mechanism |
| 20, 58, 80: | Rotating force conversion mechanism |
| 22, 82: | Fixed portion |
| 24, 84: | Movable portion |
| 26a, 26b, 86a, 86b: | Elastic portion |
| 36: | Inner housing |
| 38, 44: | Eccentric ring |
| 46: | Transmitting means |
| 52: | Roller |
| 62: | Outer housing |
| 94: | Tapered shaft |
| 96: | Power ring |
| 98: | Roller member |
| 100, 200: | Apparatus |
| 106: | Spindle |
| 108: | Communication control circuit |
| 110: | Controller |
| 112: | Battery |
| 114: | Battery charger |
| 128: | DC motor |
| 146, 224: | Detecting mechanism |

**Claims**

1. A tool position adjustment mechanism comprising:

a housing having a fixed portion that is installed on a shank integrally or separately, a movable portion whereon a tool is mounted and an elastic portion comprising a pair of flat plates parallel to each other and capable of freely moving said tool in only one straight direction among radial directions perpendicular to the axial direction of said shank;
a drive mechanism that applies a force to rotate around the axis of said shank;
a rotating force conversion mechanism that is capable of adjusting the position of said tool in said radial direction by converting said rotating force into reciprocal moving force along said radial direction.

2. A tool position adjustment mechanism having the structure described in claim 1 wherein said rotating force conversion mechanism comprises:

an inner housing that is fixed on said shank in said housing and has an outer circumference which is concentric with said shank;
a first eccentric ring that has a center being offset from the center axis of said shank and is freely rotatable along the outer circumference of said inner housing;
a second eccentric ring that has an inner circumference which houses said first eccentric ring being offset while the outer circumference thereof is freely rotatable along the inner circumference of said movable portion; and
power transmitting means that transmits the rotating force of said drive mechanism after conversion thereof into opposite and synchronized rotating movements of said first and second eccentric rings.

3. A tool position adjustment mechanism having the structure described in claim 2 wherein said transmitting means comprises:

a first drive gear and a second drive gear connected to said drive mechanism;
an external gear that is mounted on said first eccentric ring and is in mesh with said first drive gear; and
an internal gear that is mounted on said second eccentric ring and is in mesh with said second drive gear,
wherein the pitch circle diameter X of said external gear, the pitch circle diameter x of said first drive gear, the pitch circle diameter Y of said internal gear and the pitch circle diameter y of said second drive gear are set so as to satisfy the following relationships:

$$X/x = Y/y, \ X + x = Y - y.$$

4. A tool position adjustment mechanism having the structure as described in claim 2 wherein a plurality of rolling bodies are disposed between the outer circumference of said inner housing and the inner circumference of said first eccentric ring, between the outer circumference of said first eccentric ring and the inner circumference of said second eccentric ring, and between the outer circumference of said second eccentric ring and the inner circumference of said movable portion.

5. A tool position adjustment mechanism having the structure described in claim 1 wherein said rotating force conversion mechanism comprises:

an outer housing that is fixed on said shank while surrounding said housing and has an inner circumference which is concentric with said shank;
a first eccentric ring that has a center being offset from the center axis of said shank and is freely rotatable along the outer circumference of said movable portion;

a second eccentric ring that has an inner circumference which houses said first eccentric ring being offset while the outer circumference thereof is freely rotatable along the inner circumference of said outer housing; and

power transmitting means that transmits the rotating force of said drive mechanism after conversion thereof into opposite and synchronized rotating movements of said first and second eccentric rings.

6. A tool position adjustment mechanism having the structure as described in claim 5 wherein a plurality of rolling bodies are disposed between the outer circumference of said movable portion and the inner circumference of said first eccentric ring, between the outer circumference of said first eccentric ring and the inner circumference of said second eccentric ring, and between the outer circumference of said second eccentric ring and the inner circumference of said outer housing.

7. A tool position adjustment mechanism having the structure as described in claim 1 wherein said rotating force conversion mechanism comprises:

> a tapered shaft that is connected to said drive mechanism to rotate thereby and has a center axis disposed concentrically with the center axis of said shank;
> an expandable and contractable ring member that is integrally inserted into the inner surface of a first support portion protruding from said fixed portion toward said movable portion and into the inner surface of a second support portion protruding from said movable portion toward said fixed portion, and has a tapered inner circumferential surface that is spaced by a predetermined clearance from the tapered outer circumferential surface of said tapered shaft; and
> roller members that are disposed in said clearance to make integral contact with said tapered outer circumferential surface and said tapered inner circumferential surface, and roll with the center axis thereof being inclined in the circumferential direction with respect to the axial direction of said tapered shaft.

8. A tool position adjustment mechanism having the structure as described in claim 1 further comprising a tool position detecting mechanism that detects the moving state of said tool in said radial direction.

9. An apparatus comprising:

> a tool holder whereon a tool is mounted;
> a transceiver mechanism installed in said tool holder; and
> a controller that carries out radio communication with said transceiver mechanism,
> wherein said tool holder comprises:
> a housing having a fixed portion that is installed on a shank integrally or separately, a movable portion whereon a tool is mounted and an elastic portion comprising a pair of flat plates parallel to each other capable of freely moving said tool in only in one straight direction among the radial directions perpendicular to the axial direction of the shank;
> a drive mechanism that applies a force to rotate around the axis of said shank;
> a rotating force conversion mechanism that is capable of adjusting the position of said tool in said radial direction by converting said rotating force into reciprocal movement along said radial direction; and
> a tool position detecting mechanism that detects the moving state of said tool in said radial direction,
> wherein said controller carries out radio communication with said transceiver mechanism thereby to make it possible to control said drive mechanism according to signals from the tool position detecting mechanism.

10. An apparatus as described in claim 9 wherein the rotation force conversion mechanism comprises:

> an inner housing that is fixed on said shank in said housing and has an outer circumference which is concentric with said shank;
> a first eccentric ring that has a center being offset from the center axis of said shank and is freely rotatable along the outer circumference of said inner housing;
> a second eccentric ring that has an inner circumference which accommodates said first eccentric ring and is disposed so that the center thereof is offset, while the outer circumference thereof is freely rotatable along the inner circumference of said movable portion; and
> power transmitting means that transmits the rotating force of said drive mechanism after conversion thereof into opposite and synchronized rotating movements of said first and second eccentric rings.

11. An apparatus as described in claim 9 wherein the rotation force conversion mechanism comprises:

> an outer housing that is fixed on said shank while surrounding said housing and has an inner circumference which is concentric with said shank;

a first eccentric ring of which center is offset from the center axis of said shank and is freely rotatable along the outer circumference of said movable portion;

a second eccentric ring having an inner circumference, that accommodates said first eccentric ring, of which center is offset, while the outer circumference thereof is freely rotatable along the inner circumference of said outer housing; and

power transmitting means that transmits the rotating force of said drive mechanism after conversion thereof into opposite and synchronized rotating movements of said first and second eccentric rings.

**12.** An apparatus as described in claim 9 wherein said rotating force conversion mechanism comprises:

a tapered shaft that is connected to said drive mechanism to rotate thereby and has a center axis disposed concentrically with the center axis of said shank;

an expandable and contractable ring member that is integrally inserted into the inner surface of a first support portion protruding from said fixed portion toward said movable portion and into the inner surface of a second support portion protruding from said movable portion toward said fixed portion, and has a tapered inner circumferential surface that is spaced by a predetermined clearance from the tapered outer circumferential surface of said tapered shaft; and

roller members that are disposed in said clearance to make integral contact with said tapered outer circumferential surface and said tapered inner circumferential surface, and roll with the center axis thereof being inclined in the circumferential direction with respect to the axial direction of said tapered shaft.

**13.** An apparatus as described in claim 9 wherein said tool holder is configured to be freely mountable on and removable from the spindle.

EP 1 070 563 A1

F I G, 1

F I G, 2

12

FIG,3

FIG.4

F I G , 5

F I G , 6

FIG,7

FIG,8

FIG.9

FIG.10

$$X = ax \quad\text{———①}$$
$$Y = ay \quad\text{———②}$$
$$Y = X + x + y \quad\text{———③}$$
$$r = \frac{X+x}{2} = \frac{Y-y}{2} \quad\text{———④}$$
$$a : reduction\ ratio$$

FIG.11

| X | Y | x | y | r | a |
|---|---|---|---|---|---|
| ⋮ | ⋮ | ⋮ | ⋮ | ⋮ | ⋮ |
| 30 | 60 | 10 | 20 | 20 | 3 |
| 36 | 60 | 9 | 15 | 22.5 | 4 |
| 36 | 72 | 12 | 24 | 24 | 3 |
| 40 | 60 | 8 | 12 | 24 | 5 |
| 48 | 80 | 12 | 20 | 30 | 4 |
| 50 | 75 | 10 | 15 | 30 | 5 |
| ⋮ | ⋮ | ⋮ | ⋮ | ⋮ | ⋮ |

F I G. 1 2

FIG. 13

FIG. 14

F I G. 1 5

# INTERNATIONAL SEARCH REPORT

| International application No. |
| --- |
| PCT/JP99/01196 |

**A. CLASSIFICATION OF SUBJECT MATTER**
Int.Cl⁶ B23B29/034, B23B39/00

According to International Patent Classification (IPC) or to both national classification and IPC

**B. FIELDS SEARCHED**

Minimum documentation searched (classification system followed by classification symbols)
Int.Cl⁶ B23B29/034, B23B39/00

Documentation searched other than minimum documentation to the extent that such documents are included in the fields searched

| | | | |
| --- | --- | --- | --- |
| Jitsuyo Shinan Koho | 1920-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 63-288611, A (Ishikawajima-Harima Heavy Industries Co., Ltd.), 25 November, 1988 (25. 11. 88), Fig. 2 (Family: none) | 1-13 |
| A | JP, 4-53602, A (Kuroda Precision Industries Ltd.), 21 February, 1992 (21. 02. 92), Fig. 2 (Family: none) | 1-13 |
| A | JP, 5-200604, A (Toyota Motor Corp., et al.), 10 August, 1993 (10. 08. 93), Fig. 1 (Family: none) | 1-13 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 28 May, 1999 (28. 05. 99) | 8 June, 1999 (08. 06. 99) |

| Name and mailing address of the ISA/ Japanese Patent Office | Authorized officer |
| --- | --- |
| Facsimile No. | Telephone No. |

Form PCT/ISA/210 (second sheet) (July 1992)